# EUROPÄISCHE PATENTANMELDUNG

(11) **EP 2 316 695 A1**
(43) Veröffentlichungstag der Anmeldung: **04.05.2011**
(21) Anmeldenummer: 10170609.1
(22) Anmeldetag: 23.07.2010
(51) Int. Cl.: B60R 21/06, B60P 7/06

(54) **Laderaumtrennung mit Auszugsbegrenzungseinrichtung**

(30) Priorität: 29.10.2009 DE 102009051283
(71) Anmelder: HS Genion GmbH, 82205 Gilching (DE)
(72) Erfinder: Asendorf, Sven, 82211, Herrsching (DE)
(74) Vertreter: advotec.

(57) **Zusammenfassung**

Es wird eine Sicherheitseinrichtung für einen Laderaum (14) eines Kraftfahrzeugs (10) vorgeschlagen, umfassend ein Gehäuse (24), in dem eine Wickelwelle (36) drehbar gelagert ist und das einen Auslaufschlitz (30) für ein Trennrollo (28) aufweist, das auf die Wickelwelle (36) aufwickelbar bzw. von der Wickelwelle (36) abwickelbar ist und das an einem quer zur Wickelrichtung verlaufenden Rand mit der Wickelwelle (36) und an seinem anderen quer zur Wickelrichtung verlaufenden Rand mit einem Ausziehspriegel (34) verbunden ist, der in einem Himmelbereich (32) des betreffenden Kraftfahrzeugs fixierbar ist, sowie eine Auszugsbegrenzungseinrichtung für das Trennrollo (28). Die Auszugsbegrenzungseinrichtung umfasst eine Spaltweitenreduziereinrichtung für den Auslaufschlitz (30), die zwischen einer Freigabestellung, in der ein vollständiges Abwickeln des Trennrollos (28) von der Wickelwelle (36) möglich ist, und einer Sperrstellung schaltbar ist, in der das Trennrollo (28) nur teilweise von der Wickelwelle (36) abwickelbar ist.

## Beschreibung

Die Erfindung betrifft eine Sicherheitseinrichtung für einen Laderaum eines Kraftfahrzeuges mit den Merkmalen des Oberbegriffs des Patentanspruchs 1.

Eine derartige Sicherheitseinrichtung ist aus der Praxis bekannt und dient dazu, einen Fahrzeuginsassenraum von einem Laderaum des Kraftfahrzeugs abzutrennen. Durch die Abtrennung, die mittels eines Trennrollos der Sicherheitseinrichtung erfolgt, sollen Gegenstände, die im Laderaum transportiert werden, daran gehindert werden, in den Fahrzeuginsassenraum geschleudert zu werden. Das Trennrollo hält die Gegenstände zurück. Die bekannte Sicherheitseinrichtung umfasst ein Gehäuse, in dem eine Wickelwelle drehbar gelagert ist und das einen Auslaufschlitz für das Trennrollo aufweist, das auf die Wickelwelle aufwickelbar bzw. von der Wickelwelle abwickelbar ist. Das Trennrollo ist insbesondere netzartig ausgebildet und läuft durch den Auslaufschlitz des Gehäuses, der sich parallel zur Längsachse der Wickelwelle erstreckt. Um das Trennrollo, das über einen Zugspriegel bzw. -bügel im Himmelbereich des betreffenden Kraftfahrzeuges fixierbar ist, unter Spannung zu halten, ist die Wickelwelle mittels einer Wickelfeder in Aufwickelrichtung vorgespannt. Beim Lösen des Zugspriegels von den im Himmelbereich angeordneten Befestigungsvorrichtungen wickelt sich damit das Trennrollo selbsttätig auf die Wickelwelle auf.

Die vorstehend beschriebene Sicherheitseinrichtung kann insbesondere hinter einem oberen Randbereich einer Rückenlehne einer Rückbank des betreffenden Kraftfahrzeugs angeordnet sein. Hierzu können im Laderaum seitliche Aufnahmen für die Endbereiche des Gehäuses in der Sicherheitseinrichtung angeordnet sein, in welche dieses einrastbar ist.

Insbesondere bei so genannten Kombi-Fahrzeugen kann durch Umlegen der Rückbank oder von deren Rückenlehne der Laderaum vergrößert werden, wodurch dieser nahezu bis an die Vordersitze des betreffenden Kraftfahrzeuges reicht. Um in diesem Fall die auf den Vordersitzen positionierten Fahrzeuginsassen vor gegebenenfalls umherfliegenden Gegenständen aus dem Laderaum zu schützen, wird die Sicherheitseinrichtung in den bezogen auf die Fabrzeugausrichtung bugseitigen Bodenbereich des Laderaums bzw. den rückseitigen Bereich der umgelegten Rücksitzlehne verlagert. Von dort kann dann das Trennrollo in vertikaler Richtung nach oben bis zum Fahrzeuginnenhimmel ausgezogen und in Auszugsstellung fixiert werden. Für diesen Fall sind zusätzliche Fixiereinrichtungen für den Zugbügel des Trennrollos am Fahrzeuginnenhimmel angeordnet. Die Auszugslänge des Trennrollos bei umgelegter Rückbank ist größer als bei aufrecht angeordneter Rückbankrüekenlehne. Daher muss bei der Anordnung, in der die Sicherheitseinrichtung hinter dem oberen Randbereich der aufrecht angeordneten Rückenlehne angeordnet ist, ein hinreichender Trennrollovorrat in dem Gehäuse vorgehalten werden, der bei umgelegter Rückbank zusätzlich von der Wickelwelle abwickelbar ist. Es hat sich als sicherheitsrelevantes Problem erwiesen, dass gegen das Trennrollo geschleuderte Gegenstände aus dem Laderaum Fahrzeuginsassen verletzen könnten, wenn der Trennrollovorrat durch die resultierende Krafteinwirkung und der Ausbildung eines in Richtung Fahrzeugbug weisenden Bauches von der Wickelwelle abgewickelt wird. Um dem entgegen zu wirken, wurde vorgeschlagen, dass der Rand des Auslaufschlitzes des Gehäuses eine Zackenschiene aufweist, an der sich das netzartige Trennrollo verhaken kann und die so ein ungewolltes Abwickeln des Trennrollos von der Wickelwelle verhindert. Diese Maßnahme ist aber nur wirksam, wenn das Trennrollo aus einem weitmaschigen Netz gebildet ist.

Der Erfindung liegt die Aufgabe zugrunde, eine Sicherheitseinrichtung der einleitend genannten Gattung zu schaffen, die eine zuverlässige Auszugsbegrenzung für das Trennrollo unabhängig von der Materialbeschaffenheit desselben aufweist.

Diese Aufgabe ist erfindungsgemäß durch die Sicherheitseinrichtung mit den Merkmalen des Patentanspruchs 1 gelöst.

Erfindungsgemäß wird mithin vorgeschlagen, dass die Auszugsbegrenzungseinrichtung eine Spaltweitenreduziereinrichtung für den Auslaufschlitz umfasst, die zwischen einer Freigabestellung, in der ein vollständiges Abwickeln des Trennrollos von der Wickelwelle möglich ist, und einer Sperrstellung schaltbar ist, in der das Trennrollo nur teilweise von der Wickelwelle abwickelbar ist.

Bei der Sicherheitseinrichtung nach der Erfindung kann mithin die maximale Auszugslänge des Trennrollos durch die Spaltweite des Auslaufschlitzes eingestellt werden. Insbesondere kann damit bei aufrechter Anordnung der Rückbankrückenlehne des betreffenden Kraftfahrzeuges die Spaltweitenreduziereinrichtung in ihre Sperrstellung geschaltet werden, in der das Trennrollo ab einer gewissen Auszugslänge durch die reduzierte Spaltweite des Auslaufschlitzes an einem weiteren Abwickeln von der Wickelwelle gehindert wird. Im umgelegten Zustand der Rückbankrückenlehne bzw. der Rückbank, das heißt bei einem vergrößerten Laderaum, in dem die Sicherheitseinrichtung nahe an den Vordersitzen des betreffenden Kraftfahrzeuges anzuordnen ist, wird die Spaltweitenreduziereinrichtung zweckmäßigerweise in ihre Freigabestellung geschaltet, in der das Trennrollo vollständig von der Wickelwelle abgewickelt werden kann und somit vom Bodenbereich des Laderaums bis an den Fahrzeuginnenhimmel geführt und dort über den Ausziehspriegel bzw. -bügel fixiert werden kann.

Bei einer bevorzugten Ausführungsform der Sicherheitseinrichtung nach der Erfindung umfasst die Spaltweitenreduziereinrichtung ein Exzenterelement, das zwischen der Freigabestellung und der Sperrstellung verschwenkbar ist. Durch die Drehstellung des Exzenterelements wird also die Spaltweite des an dem Gehäuse ausgebildeten Auslaufschlitzes für das Trennrollo festgelegt.

Bei einer bevorzugten Ausführungsform der Sicherheitseinrichtung nach der Erfindung weist das Trennrollo eine quer zur Ausziehrichtung verlaufende Aufdickung auf, die mit der Spaltweitenreduziereinrichtung in dessen Sperrstellung zusammenwirkt. Beim Ausziehen des Trennrollos in der Sperrstellung der Spaltweitenreduziereinrichtung läuft also die Aufdickung des Trennrollos auf die Spaltweitenreduziereinrichtung auf, so dass ein weiteres Ausziehen des Trennrollos blockiert ist.

Die Aufdickung des Trennrollos ist beispielsweise von einem in das Trennrollo eingesetzten Profilelement gebildet. Beispielsweise ist das Profilelement eine Kunststoffstange oder eine Metallstange mit rundem oder ovalem Querschnitt, welche in das Material des Trennrollos eingebettet, insbesondere eingenäht ist. Alternativ oder zusätzlich ist es auch möglich, die Aufdickung durch eine genähte Falte des Trennrollos zu bilden. Denkbar ist es auch, gänzlich ohne Aufdickung auszukommen. In diesem Falle müsste dann die Reibung zwischen dem Trennrollo und dem in Sperrstellung geschalteten Exzenterelement ab einer bestimmten Auszugslänge so groß sein, dass ein weiteres Ausziehen des Trennrollos nicht mehr möglich ist.

Um die Spaltweitenreduziereinrichtung in Abhängigkeit von der Einbauposition der Sicherheitseinrichtung schalten zu können, ist vorzugsweise ein Aktivierungselement vorgesehen, bei dessen Betätigung die Schaltweitenreduziereinrichtung in Sperrstellung schaltet.

Das Aktivierungselement ist bei einer speziellen Ausführungsform der Sicherheitseinrichtung nach der Erfindung als Schieber ausgebildet, der einen Verzahnungsabschnitt aufweist, der mit einer Verzahnung der Spaltweitenreduziereinrichtung in Eingriff steht. Bei einer Betätigung des Schiebers wird damit die insbesondere als Exzenterelement ausgebildete Spaltweitenreduziereinrichtung verdreht und somit aus der Freigabestellung in die Sperrstellung verschwenkt.

Der Schieber kann mittels einer Feder in seine Deaktivierungsstellung vorgespannt sein. Damit ist es möglich, dass der Schieber durch Anlage an einer Fläche des fahrzeugfesten Lagers für das Gehäuse der Sicherheitseinrichtung zur Aktivierung der Spaltweitenreduziereinrichtung zwangsläufig gedrückt wird, wodurch die Spaltweitenreduziereinrichtung in Sperrstellung schaltet, und bei der Demontage der Sicherheitseinrichtung von dem Lager selbsttätig in die Freigabestellung zurückgeschwenkt wird.

Zur eindeutigen Festlegung der Freigabestellung und der Sperrstellung weist die Spaltweitenreduziereinrichtung vorzugsweise ein Anschlagelement auf, das zur Festlegung der Freigabestellung und/oder der Sperrstellung mit mindestens einem Gegenanschlag des Gehäuses zusammenwirkt.

Bei einer weiteren speziellen Ausführungsform der Sicherheitseinrichtung ist das Exzenterelement auf einem Verbindungsrohr gelagert, das zur Synchronisierung von bezogen auf eine Fahrzeuglängsmittelebene beidseits angeordneten Verriegelungseinrichtungen dient.

Bei einer weiteren speziellen Ausführungsform der Sicherheitseinrichtung nach der Erfindung umfasst, die Spaltweitenreduziereinrichtung als Schaltelement ein Trägheitselement, das bei einer Verzögerung des Kraftfahrzeuges die Spaltweitenreduziereinrichtung in Sperrstellung schaltet. Das Trägheitselement ist insbesondere ein gegenüber der Achse der Spaltweitenreduziereinrichtung exzentrisch angeordnetes Gewicht, das mit dem Exzenterelement bzw. der Schaltweitenreduziereinrichtung verbunden ist und beispielsweise ab einer Verzögerung von 10g schaltet.

Weitere Vorteile und vorteilhafte Ausgestaltungen des Gegenstandes der Erfindung sind der Beschreibung, der Zeichnung und den Patentansprüchen entnehmbar.

Ein Ausführungsbeispiel einer Sicherheitseinrichtung nach der Erfindung ist in der Zeichnung schematisch vereinfacht dargestellt und wird in der nachfolgenden Beschreibung näher erläutert. Es zeigt:
- Fig. 1: eine stark schematisierte Seitenansicht eines Heckbereichs eines Kraftfahr- zeugs bei aufrecht angeordneter Rückbankrückenlehne;
- Fig. 2: eine Fig. 1 entsprechende Ansicht, jedoch bei umgelegter Rückbankrücken- lehne;
- Fig. 3: einen Schnitt durch eine Sicherheitseinrichtung mit einem Trennnetz bei aktivierter Auszugsbegrenzungseinrichtung;
- Fig. 4: eine Fig. 3 entsprechende Ansicht, Jedoch bei deaktivierter Auszugsbegren- zungseinrichtung; und

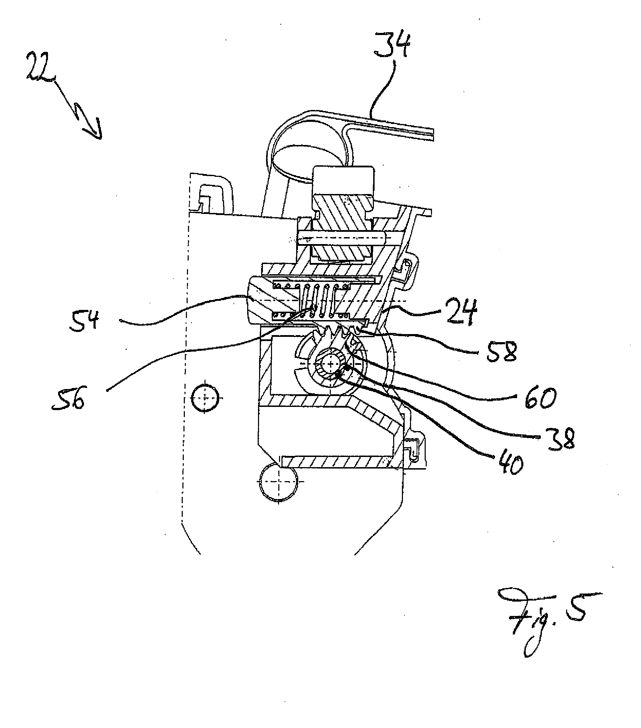

- Fig. 5: einen Schnitt durch die Sicherheitseinrichtung im Bereich eines Aktivierungs- schiebers zur Aktivierung und Deaktivierung der Auszugsbegrenzungseinrich- tung.

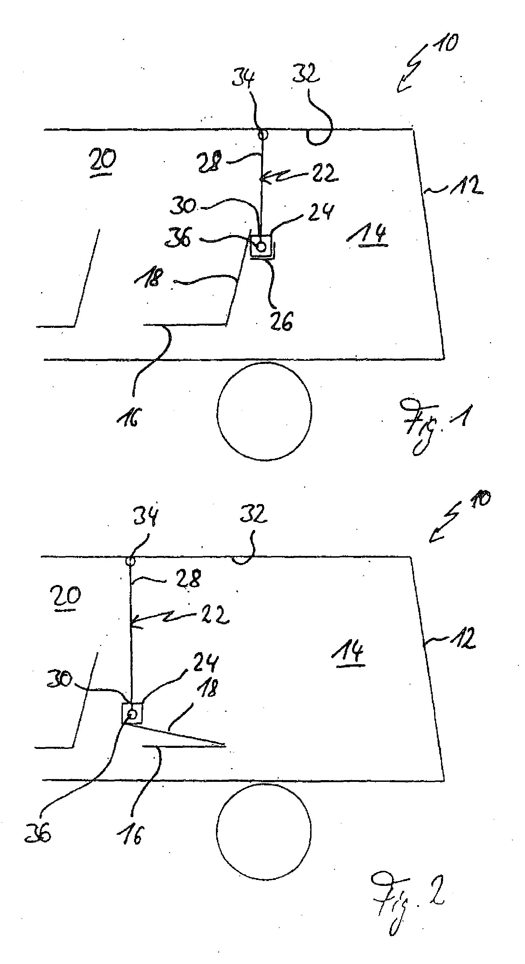

In den Figuren 1 und 2 ist ein Kraftfahrzeug 10 dargestellt, das als so genanntes Kombi-Fahrzeug ausgebildet ist und einen Laderaum 14 aufweist, der heckseitig von einer Ladeklappe 12 begrenzt ist. Das Kraftfahrzeug 10 ist des Weiteren mit einer Rückbank 16 ausgestattet, die eine umlegbare Rückenlehne 18 hat. Die Rückenlehne 18 ist zwischen der in Fig. 1 dargestellten aufrechten Stellung, in der sie den Laderaum 14 frontseitig begrenzt, und einer in Fig. 2 dargestellten umgeklappten Stellung verschwenkbar, in der der Laderaum 14 nach vorne erweitert ist und in der in einem bugseitigen Bereich des Laderaums 14 die Rückseite der Rückenlehne 18 einen Laderaumbodenabschnitt bildet.

Um den Laderaum 14 von einem Fahrzeuginsassenram 20 zu trennen, ist das Kraftfahrzeug 10 des Weiteren mit einer Sicherheitseinrichtung 22 ausgestattet, durch die Insassen des Fahrzeuginsassenraums 20 vor Gegenständen geschützt werden können, die gegebenenfalls in Unfallsituationen oder dergleichen nach vorne geschleudert werden. Der Sicherheitseinrichtung 22 ist eine erste, in Fig. 1 dargestellte Einbausituation und eine zweite, in Fig. 2 dargestellte Einbausituation zugeordnet. In der ersten Einbausituation ist die Sicherheitseinrichtung 22 mit einem Gehäuse 24 angrenzend an die Rückseite der Rückenlehne 18 der Rückbank 16 in seitlichen karosseriefesten Aufnahmen 26 gelagert. In der zweiten, in Fig. 2 dargestellten Einbausituation ist das Gehäuse 24 der Sicherheitseinrichtung 22 zusammen mit der Rückenlehne 18 nach vorne unten verschwenkt. In beiden Einbausituationen ist ein Trennnetz 28 durch einen Auslaufschlitz 30 des Gehäuses 24 zumindest annähernd in vertikaler Richtung nach oben bis an einen Innenhimmel 32 des Fahrzeuginnenraums geführt und dort über einen Ausziehspriegel bzw. -bügel 34 fixiert. Die Auszugslänge des ein Fangnetz darstellenden Trennnetzes 28 ist bei der in Fig. 2 dargestellten Einbauposition größer als bei der in Fig. 1 dargestellten, ersten Einbausituation, in welcher ein Trennnetzvorrat auf einer in dem Gehäuse 24 angeordneten Wickelwelle 36 vorgehalten wird, auf der das Trennnetz 28 aufwickelbar bzw. von der das Trennnetz 28 abwickelbar ist und die in Aufwickelrichtung des Trennnetzes 28 mittels einer nicht näher dargestellten Feder vorgespannt ist.

Das Trennnetz 28 ist in einem in Fahrzeugquerrichtung verlaufenden Endbereich zu einer Schlaufe vernäht, die von der Wickelwelle 36 durchgriffen ist und zur Verdrehsicherung mittels nicht dargestellter Niete mit der Wickelwelle 36 verbunden ist.

Des Weiteren ist die Sicherheitseinrichtung 22 mit ihren im Bereich der Aufnahme 26 angeordneten Endbereichen jeweils mit einem Haltesystem ausgestattet, das eine verliersichere Verbindung mit den Aufnahmen 26 ermöglicht.

Um die Auszugslänge des Trennnetzes 28 begrenzen zu können, ist in dem Gehäuse 24 der Sicherheitseinrichtung ein sich in Fahrzeugquerrichtung erstreckendes Exzenterelement 38 auf einem Verbindungsrohr 40 drehbar gelagert, das die beidseits an der Sicherheitseinrichtung 22 ausgebildeten Haltesysteme zur Anbindung an die fahrzeugfesten Aufnahmen 26 miteinander verbindet und so deren synchrone Betätigung gewährleistet.

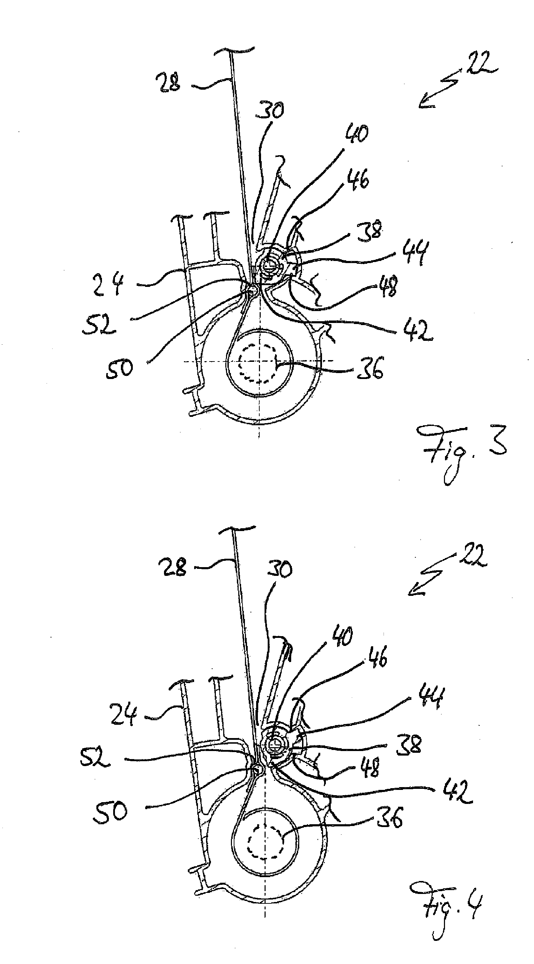

Das Exzenterelement 38, das die Spaltweitenreduziereinrichtung bildet und das rohrartig ausgebildet ist, weist einen Exzenternocken 42 auf, mittels dessen bei einer entsprechenden Drehstellung des Exzenterelements 38 gegenüber dem Gehäuse 24 die Spaltweite des Auslaufschlitzes 30 in der in Fig. 3 dargestellten Weise reduziert werden kann. Zur Reduzierung der Spaltweite des Auslaufschlitzes 30 wird also der Exzenternocken 42 des Exzenterelements 38 in den Auslaufschlitz 30 gedreht. Er ragt also in den Auslaufschlitz 30. Dies entspricht der Sperrstellung des Exzenterelements 38 bzw. der von diesem gebildeten Auszugsbegrenzungseinrichtung. In der Freigabestellung ist der Exzenternocken 42 des Exzenterelements 38 so verschwenkt, dass der Auslaufschlitz 30 des Gehäuses 24 im Wesentlichen vollständig freigegeben ist.

Zur eindeutigen Festlegung der Freigabestellung und der Sperrstellung des Exzenterelements 38 ist dieses mit einem Anschlagelement 44 versehen, das mit Gegenanschlägen 46 und 48 des Gehäuses 24 zusammenwirkt.

Um mit dem Exzenterelement 38 zusammenwirken zu können, weist das Trennnetz 28 eine von einem Kunststoffstab 50 gebildete Aufdickung 52 auf, welche in Sperrstellung des Exzenterelements 38 beim Ausziehen des Trennnetzes 28 auf den Exzenternocken 42 auffährt, wie in Fig. 3 dargestellt ist. Wenn das Exzenterelement 38 in seine Freigabestellung verschwenkt ist (vgl. Fig. 4), kann die Aufdickung 52 an dem Exzenterelement 38 vorbei durch den Auslaufschlitz 30 gezogen werden, so dass das Trennnetz 28 vollständig von der Wickelwelle 36 abgewickelt werden kann.

Die jeweilige Schaltstellung, in der das Trennnetz 28 nur teilweise (erste Einbausituation) oder vollständig (zweite Einbausituation) von der Wickelwelle 36 abwickelbar ist, wird durch einen Aktivierungsschieber 54 bestimmt, der mittels einer Feder 56 in eine Deaktivierungsstellung vorgespannt ist und dessen Achse in einer vertikalen Projektion rechtwinkelig zur Achse des Exzenterelements 38 bzw. der Wickelwelle 36 ausgerichtet ist. Der Aktivierungsschieber 54 weist einen Verzahnungsabschnitt 58 auf, der mit einer Verzahnung 60 in Eingriff steht, welche in einem Endbereich des rohrartig ausgebildeten Exzenterelements 38 ausgebildet ist. Im entspannten Zustand der Feder 56, das heißt im ausgefahrenen Zustand des Aktivierungsschiebers 54 nimmt das Exzenterelement 38 seine in Fig. 4 dargestellte Freigabestellung ein. Wenn der Aktivierungsschieber 54 gedrückt ist, was in der ersten Einbausituation oder Sicherheitseinrichtung an der Brüstung der Rückbank 16 durch Anliegen der Stirnfläche des Aktivierungsschiebers 54 an einer fahrzeugfesten Gegenfläche der Fall ist, ist das Exzenterelement 38 in seine in Fig. 3 dargestellte Sperrstellung verdreht, so dass es als Spaltweitenreduziereinrichtung für den Auslaufschlitz 30 wirkt und in Verbindung mit der Aufdickung 52 des Trennnetzes 28 die maximale Ausziehlänge des Trennnetzes 28 begrenzt. Im nicht an den fahrzeugfesten Aufnahmen 26 montierten Zustand wird also der Aktivierungsschieber 54 mittels der Feder 56 bezogen auf das Gehäuse 24 nach außen gegen einen Anschlag desselben gedrückt. Dadurch wird das Exzenterelement 38 in seiner Freigabestellung gehalten, in der der Exzenternocken 42 den Auslaufschlitz 30 im Wesentlichen vollständig freigibt. Die Ausziehbegrenzungseinriehtung, die von dem Exzenterelement 38 gebildet ist, ist damit außer Funktion gesetzt, wodurch das Trennnetz 28 vollständig ausgezogen werden kann. Dies ist in der in Fig. 2 dargestellten, zweiten Einbausituation, in der das Trennnetz vom Laderaumboden bis an den Innenhimmel des Fahrzeuginnenraums gezogen werden soll, auch erforderlich.

Wenn die Sicherheitseinrichtung 22 an den Aufnahmen 24, das heißt in der ersten Einbausituation gesichert wird, wird der Aktivierungsschieber 54 gedrückt, wodurch das Exzenterelement 38 in seine Sperrstellung verdreht wird, in der der Exzenternocken 42 den Auslaufschlitz 30 teilweise verdeckt. Diese Sperrstellung ist der ersten, in Fig. 3 dargestellten Einbausituation zugeordnet, in der die Rückenlehne 18 der Rückbank 16 aufrecht angeordnet ist.

### Bezugszeichenliste

- 10: Kraftfahrzeug
- 12: Ladeklappe
- 14: Laderaum
- 16: Rückbank
- 18: Rückenlehne
- 20: Fahrzeuginsassenraum
- 22: Sicherheitseinrichtung
- 24: Gehäuse
- 26: Aufnahme
- 28: Trennnetz
- 30: Auslaufschlitz
- 32: Innenhimmel
- 34: Ausziehbügel
- 36: Wickelwelle
- 38: Exzenterelement
- 40: Verbindungsrohr
- 42: Exzenternocken
- 44: Anschlagelement
- 46: Gegenanschlag
- 48: Gegenanschlag
- 50: Kunststoffstab
- 52: Aufdickung
- 54: Aktivierungsschieber
- 56: Feder
- 58: Verzahnungsabschnitt
- 60: Verzahnung

## Patentansprüche

1. Sicherheitseinrichtung für einen Laderaum (14) eines Kraftfahrzeugs (10), umfassend ein Gehäuse (24), in dem eine Wickelwelle (36) drehbar gelagert ist und das einen Auslaufschlitz (30) für ein Trennrollo (28) aufweist, das auf die Wickelwelle (36) aufwickelbar bzw. von der Wickelwelle (36) abwickelbar ist und das an einem quer zur Wickelrichtung verlaufenden Rand mit der Wickelwelle (36) und an seinem anderen quer zur Wickelrichtung verlaufenden Rand mit einem Ausziehspriegel (34) verbunden ist, der in einem Himmelbereich (32) des betreffenden Kraftfahrzeugs fixierbar ist, sowie eine Auszugsbegrenzungseinrichtung für das Trennrollo (28), **dadurch gekennzeichnet, dass** die Auszugsbegrenzungseinrichtung eine Spaltweitenreduziereinrichtung für den Auslaufschlitz (30) umfasst, die zwischen einer Freigabestellung, in der ein vollständiges Abwickeln des Trennrollos (28) von der Wickelwelle (36) möglich ist, und einer Sperrstellung schaltbar ist, in der das Trennrollo (28) nur teilweise von der Wickelwelle (36) abwickelbar ist.

2. Sicherheitseinrichtung nach Anspruch 1, **dadurch gekennzeichnet, dass** die Spaltweitenreduziereinrichtung ein Exzenterelement (38) umfasst, das zwischen der Freigabestellung und der Sperrstellung verschwenkbar ist.

3. Sicherheitseinrichtung nach Anspruch 1 oder 2, **dadurch gekennzeichnet, dass** das Trennrollo (28) eine quer zur Ausziehrichtung verlaufende Aufdickung (52) aufweist, die mit der Spaltweitenreduziereinrichtung in deren Sperrstellung zusammenwirkt.

4. Sicherheitseinrichtung nach Anspruch 3, **dadurch gekennzeichnet, dass** die Aufdickung (52) von einem in das Trennrollo eingebetteten Profilelement (50) gebildet ist.

5. Sicherheitseinrichtung nach einem der Ansprüche 1 bis 4, **dadurch gekennzeichnet, dass** die Spaltweitenreduziereinrichtung mit einem Aktivierungselement (54) verbunden ist, bei dessen Betätigung in Aktivierungsstellung die Spaltweitenreduziereinrichtung in Sperrstellung schaltet.

6. Sicherheitseinrichtung nach Anspruch 5, **dadurch gekennzeichnet, dass** das Aktivierungselement (54) ein Schieber ist, der einen Verzahnungsabschnitt (58) aufweist, der mit einer Verzahnung (60) der Spaltweitenreduziereinrichtung in Eingriff steht.

7. Sicherheitseinrichtung nach Anspruch 6, **dadurch gekennzeichnet, dass** der Schieber (54) mittels einer Feder (56) in seine Deaktivierungsstellung vorgespannt ist.

8. Sicherheitseinrichtung nach einem der Ansprüche 1 bis 7, **dadurch gekennzeichnet, dass** die Spaltweitenreduziereinrichtung ein Anschlagelement (44) aufweist, das zur Festlegung der Freigabestellung und/oder der Sperrstellung mit mindestens einem Gegenanschlag (46, 48) des Gehäuses (24) zusammenwirkt.

9. Sicherheitseinrichtung nach Anspruch 2, **dadurch gekennzeichnet, dass** das Exzenterelement (38) auf einem Verbindungsrohr (40) gelagert ist, das zur Synchronisierung von bezogen auf eine Fahrzeuglängsmittelebene beidseits angeordneten Verriegelungseinrichtungen zur Anbindung des Gehäuses (24) an den Fahrzeugaufbau dient.

10. Sicherheitseinrichtung nach einem der Ansprüche 1 bis 9, **dadurch gekennzeichnet, dass** die Spaltweitenreduziereinrichtung als Schaltelement ein Trägheitselement umfasst, das bei einer Verzögerung des Fahrzeugs die Spaltweitenreduziereinrichtung in Sperrstellung schaltet und das vorzugsweise ein gegenüber der Achse der Spaltweitenreduziereinrichtung exzentrisch angeordnetes Gewicht ist.
